# EUROPEAN PATENT SPECIFICATION

(11) **EP 4 264 733 B1**
(45) Date of publication and mention of the grant of the patent: **09.09.2026**
(21) Application number: 21820733.0
(22) Date of filing: 02.12.2021
(51) Int. Cl.: B25F 5/02, H01M 50/213, H01M 50/242, H01M 50/247, H01M 50/258, H01M 50/267, H01M 50/271, H01M 50/291

(54) **SHOCK AND VIBRATION RESILIENT BATTERIES FOR POWER TOOLS**
STOSS- UND VIBRATIONSBESTÄNDIGE BATTERIEN FÜR ELEKTROWERKZEUGE
BATTERIES RÉSISTANT AUX CHOCS ET AUX VIBRATIONS POUR OUTILS ÉLECTRIQUES

(30) Priority: 15.12.2020 SE 2051463
(43) Date of publication of application: 25.10.2023
(73) Proprietor: HUSQVARNA AB, 561 82 Huskvarna (SE)
(72) Inventor: DOLK, Philip, 553 24 Jönköping (SE)
(86) International application number: PCT/SE2021/051197
(87) International publication number: WO 2022/131993

(56) References cited:
- EP-A2- 1 516 702
- CN-A- 111 244 349
- US-A1- 2018 301 773
- US-A1- 2019 027 720

## Description

### TECHNICAL FIELD

The present disclosure relates to batteries for electrically powered and hybrid electric power tools. The batteries are suitable for use with hand-held construction equipment such as cut-off tools, core drills and saws for cutting concrete and stone. The batteries can also be used with chainsaws as well as with lawn and green space care products such as lawn movers, hedge trimmers, and the like.

### BACKGROUND

Advancements in battery technology has enabled battery powered electrical power tools which perform at the same level as corresponding power tools powered via cable from mains or by combustion engine. For instance, battery powered cut-off tools, chain saws, and various types of products for lawn and grounds care can today be driven by electric motors powered by rechargeable batteries where previously a cable to mains or a combustion engine was required. Hybrid power tools have also been proposed which make use of a combination of rechargeable battery and combustion energy to perform the task at hand in an efficient manner.

Applications like the above-mentioned are normally associated with harsh operating conditions which subject the power tools, and consequently also the batteries, to strong vibration and mechanical impacts. Battery cells are sensitive to excessive levels of vibration and mechanical shock and must therefore be protected in order for the battery to attain the level of shock resilience required to function under these harsh operating conditions.

EP 1 516 702 A2 discloses a battery for power tool, said battery comprising a housing and a group of elongated battery cells. Two internal, annular elastic members for impact dampening are arranged in the internal cavity of the housing.

US 2019/027720 A1 discloses a power tool battery which includes a housing comprising a central housing and opposite first and second gables, wherein the gables mate with the central housing along respective gable rims. A flexible circuit board and elastic thermally conductive elements are included inside the housing.

US 2018/301773 A1 discloses a battery pack wherein resilient members are included in a battery housing comprising upper and lower half-casings.

CN 111 244 349 A discloses a battery for an electric vehicle, said battery comprising four diagonal resilient members comprising springs which suspend a battery pack within a two-part box.

Despite said advancements in battery technology, there is a continuing need for improved batteries for electrically powered and hybrid power tools able to withstand strong vibration and mechanical shock.

### SUMMARY

It is an object of the present disclosure to provide improved batteries for electrically powered and hybrid power tools.

This object is at least in part obtained by a battery for a power tool. The battery comprises a central housing terminated by a first gable and by a second gable. The first gable is arranged opposite to the second gable and faces in an insertion direction of the battery. The gables mate with the central housing along respective gable rims, thereby defining a volume delimited by the gables and by the central housing. The battery further comprises a battery cell pack comprising a plurality of elongated battery cells extending in an elongation direction transversal to the insertion direction. The battery cell pack is arranged suspended in the volume by at least three resilient members, wherein each resilient member extends in a direction diagonally away from a mass center of the battery cell pack and transversal to the elongation direction, towards a supporting location on one of the gable portion rims.

Thus, the battery cell pack is well protected from both vibration and mechanical shock by the resilient members, and especially from forces directed transversally to the battery cell elongation direction which is crucial to good shock resilience. It is a further advantage that the resilient members are supported by the gables and not by the central housing, since it is normally the gables which are subjected to mechanical impact.

By means of the disclosed resilient members arranged to suspend the battery cell pack, larger tolerances in, e.g., the central housing and gables can be tolerated, which is an advantage.

The outer hull on the disclosed battery can easily be replaced in its entirety should one or more parts of it become damaged. Thus, the more expensive interior comprising the battery cells can be re-used in a convenient manner in case the outer battery structure should suffer mechanical damage of some sort.

According to aspects, the elongated battery cells extend between a first supporting planar structure and a second supporting planar structure, wherein the resilient members are attached to the supporting planar structure.

These supporting planar structures distribute impact forces efficiently over the resilient members. Thus, impact forces can be more efficiently absorbed by the battery.

According to aspects, at least one of the resilient members is supported on a respective arm extending from the battery cell pack towards the supporting location. The geometry of this arm can be adapted to fit different gable geometries, which is an advantage since the same resilient member can be re-used with different battery types.

According to aspects, the volume extends in fluid connection to all sides of the battery cell pack. This improves the cooling efficiency of a flow of cooling air traversing the battery interior.

According to aspects, the resilient members are non-fixedly supported on the gable portion rims. This simplifies disassembly of the battery, thereby allowing for efficient recycling of the battery. Having non-fixedly supported resilient members also allow for convenient servicing of the battery pack, inspection, and general battery pack maintenance.

According to aspects, at least one of the resilient members is pivotably attached to a respective trunnion on the battery cell pack. This allows the resilient member to adapt to different angles of the supporting surface on the gable, which is an advantage since it allows the resilient member to easily adjust to different gable geometries.

According to aspects, a resilient member comprises one or more cavities. The cavities promote the shock absorption ability of the resilient member. The number and size of the cavities can be adjusted to adapt the hardness of the resilient member and thus also the shock absorption ability of the resilient member.

According to aspects, the first gable and the second gable are attached to the central housing by releasable fastening members. The releasable fastening members allow for convenient disassembly of the battery. The battery pack can easily be taken out from the central housing, inspected and/or serviced, and then replaced in the central housing.

The object is also obtained by a modular battery system comprising a plurality of battery types. Each battery type comprises a central housing terminated by a first gable and by a second gable. The first gable is arranged opposite to the second gable and faces in the insertion direction. The gables mate with the central housing along respective gable rims, thereby defining a volume delimited by the gables and the central housing, where each gable defines a respective first and second gable volume. Each battery type further comprises a battery cell pack arranged suspended in the volume by at least three resilient members, wherein the resilient members extend in a direction diagonally away from a mass center of the battery cell pack towards a supporting location on one of the gable portion rims. The central housing is the same for each battery type in the plurality of battery types, and the first and/or second gable volume differs between a first battery type and a second battery type in the plurality of battery types.

By having the same central housing on all types of batteries in the modular battery system and different gable portions, the energy capacity of the battery can be adapted to the power tool and task at hand, without changing any of the interfaces towards the power tool or towards a battery charger, since both mechanical attachment arrangement and the electrical connectors are arranged on the central housing which is the same for all types. Due to the nature of the herein described shock absorption arrangements, the same shock absorption members can be re-used for each of the different battery types comprised in the modular battery system.

Different battery types can also be fitted with different shock absorption systems, i.e., resilient members of varying size and vibration absorption ability.

Thus, even though the gables are of the same type, different battery cell packs may be housed in the volume delimited by the gables and the central housing.

The resilient members can also be matched to a given application, i.e., by computer simulation or laboratory experiments, the resilient members on a given type of battery in the modular battery system can be matched to the vibrations generated by a certain power tool or work task.

Generally, all terms used in the claims are to be interpreted according to their ordinary meaning in the technical field, unless explicitly defined otherwise herein. All references to "a/an/the element, apparatus, component, means, step, etc." are to be interpreted openly as referring to at least one instance of the element, apparatus, component, means, step, etc., unless explicitly stated otherwise. Further features of, and advantages with, the present invention will become apparent when studying the appended claims and the following description. The skilled person realizes that different features of the present invention may be combined to create embodiments other than those described in the following, without departing from the scope of the present invention.

### BRIEF DESCRIPTION OF THE DRAWINGS

The present disclosure will now be described in more detail with reference to the appended drawings, where
- Figure 1: shows an example power tool;
- Figure 2: illustrates an example battery compartment;
- Figures 3-4: illustrate example shock resilient batteries;
- Figure 5: shows an example battery cell pack;
- Figure 6: illustrate battery types comprised in a modular battery system;
- Figures 7A-B: schematically illustrate a suspended battery cell pack;
- Figures 8-9: show details of resilient members; and
- Figure 10: illustrates a resilient member supporting location on a gable.

### DETAILED DESCRIPTION

The invention will now be described more fully hereinafter with reference to the accompanying drawings, in which certain aspects of the invention are shown. This invention may, however, be embodied in many different forms and should not be construed as limited to the embodiments and aspects set forth herein; rather, these embodiments are provided by way of example so that this disclosure will be thorough and complete, and will fully convey the scope of the invention to those skilled in the art. Like numbers refer to like elements throughout the description.

It is to be understood that the present invention is not limited to the embodiments described herein and illustrated in the drawings; rather, the skilled person will recognize that many changes and modifications may be made within the scope of the appended claims.

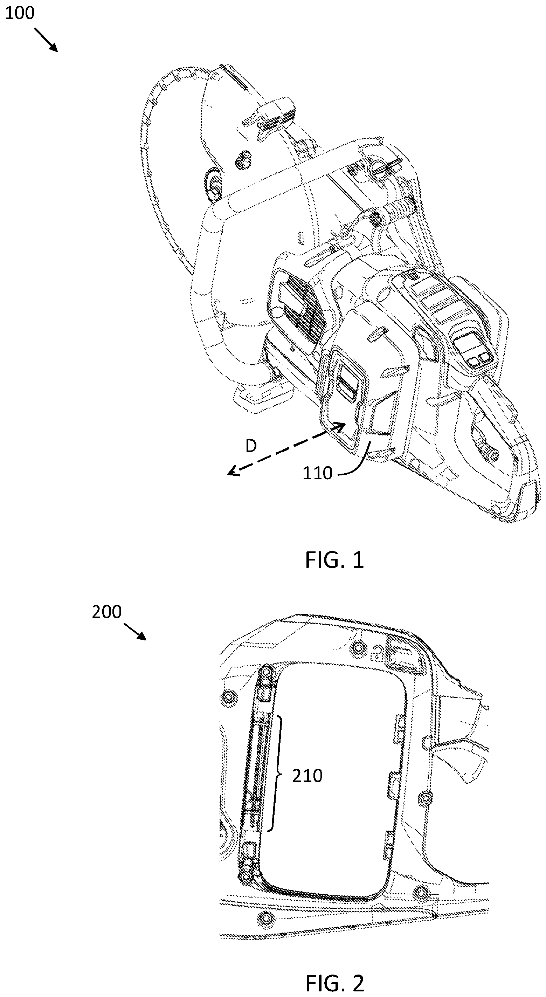

Figure 1 shows a hand-held power tool 100. The power tool 100 in Figure 1 is an electrically powered cut-off tool, but the techniques and devices disclosed herein can also be applied to other types of electrically powered work tools, such as chainsaws, and core drills. The herein disclosed techniques and devices can also be used with gardening and landscaping equipment such as lawn movers, blowers, hedge trimmers, clearing saws and the like.

The power tool 100 comprises a battery 110 for powering the tool. This particular battery is arranged inserted into a through-hole battery compartment 200, shown in more detail in Figure 2. The battery is inserted into the battery compartment in an insertion direction D into a mating position where electrical connectors on the battery are in electrical connection with corresponding electrical connectors 210 on the power tool. The batteries discussed herein are particularly suitable for insertion into a through-hole battery compartment like the battery compartment 200 illustrated in Figure 2, where battery gable portions extend outside of the battery compartment on either side of the power tool 100 as in Figure 1. However, it is appreciated that the batteries disclosed herein may also be attached externally to a power tool, by means of externally mounted attachment means on the power tool, such as external rails on the power tool body and the like.

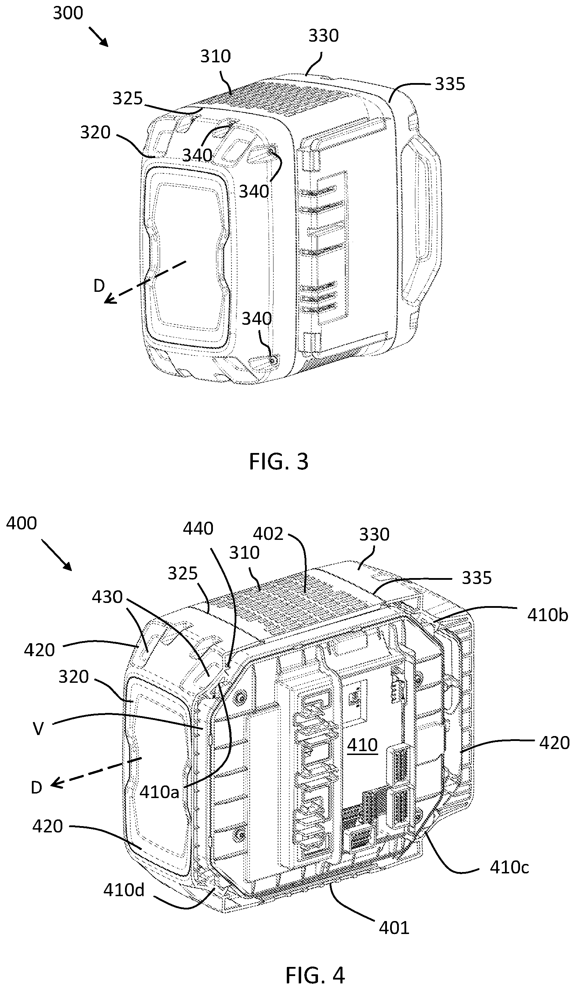

Figures 3 and 4 illustrate an example battery 300, 400, suitable for use, e.g., with the power tool 100. The battery comprises a central housing 310 terminated by a first gable 320 and by a second gable 330. The first gable 320 is arranged opposite to the second gable 330 and faces in the insertion direction D of the battery. The gables 320, 330 mate with the central housing 310 along respective gable rims 325, 335, thereby defining a volume V delimited by the gables 320, 330 and the central housing 310, which volume encloses the battery cell pack.

The gable sections are preferably attached to the central housing 310 by releasable fastening members 340, such as threaded members, i.e., screws or bolts. This simplifies assembly of the battery and also allows for convenient disassembly during recycling of the battery components. The releasable fastening members also simplify inspection of the battery pack and general battery maintenance.

The gable rims 325, 335 may be rectangular or have rounded rectangular shapes as in the example of Figure 3. In this case the central housing 310 has eight corners and each corner is associated with a respective resilient member 410a-h. However, other geometries can be used with the herein disclosed techniques. For instance, a polygonal cross-section shape may be advantageous for some types of applications, or a more tubular design.

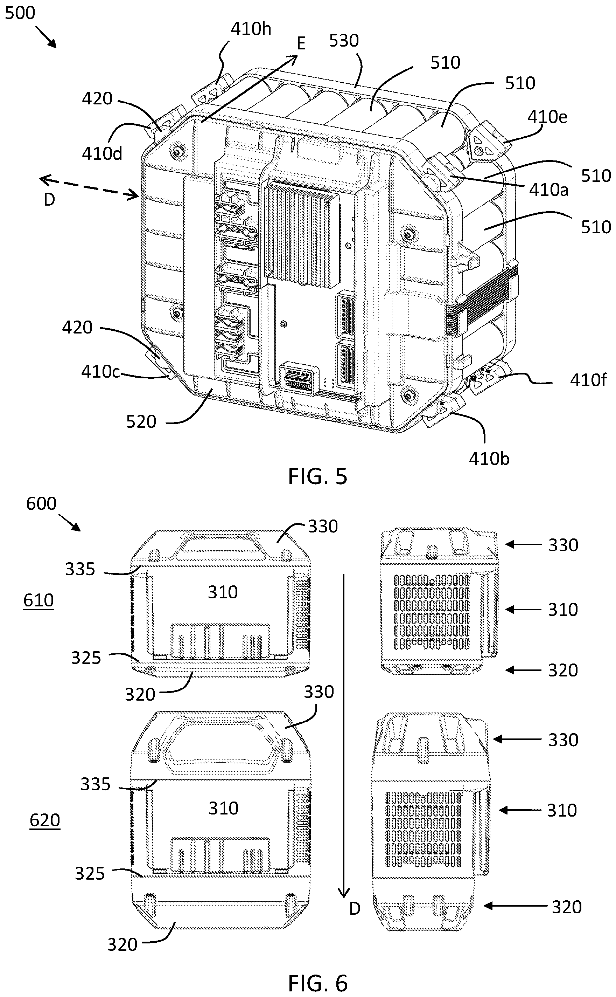

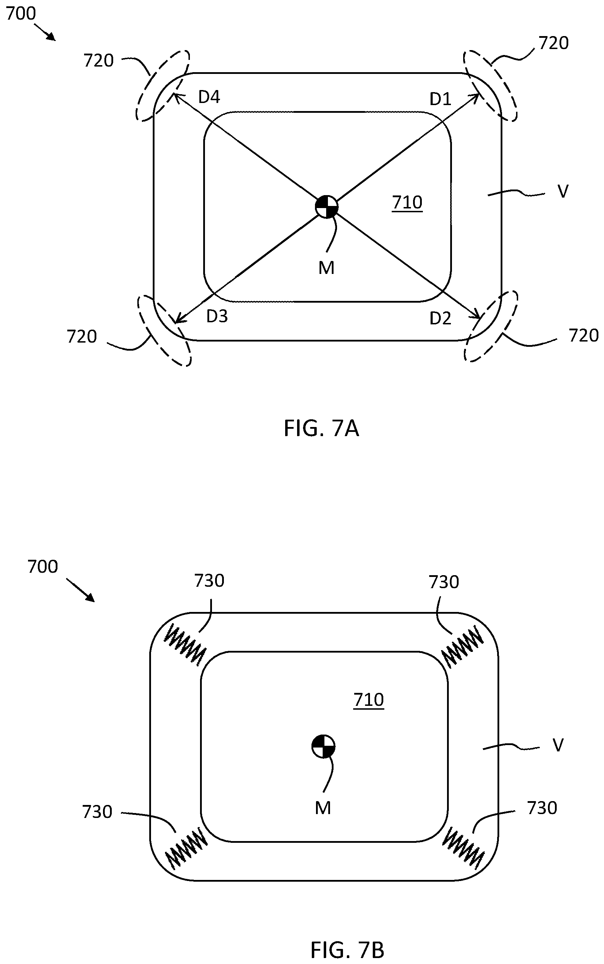

The battery further comprises a battery cell pack 410 which is shown in more detail in connection Figure 5. The battery cell pack 410 comprises a plurality of elongated battery cells 510 extending in an elongation direction E which is transversal to the insertion direction D. The battery cell pack 410, 500 is arranged suspended in the volume V by at least three resilient members 410ah, 730. With reference to Figure 7A, the resilient members 410a-h extend in a direction D1-D4 diagonally away from a mass center M of the battery cell pack 410, 500, 700 and transversal to the elongation direction E, towards a supporting location 720 on one of the gable portion rims 325, 335.

By suspending the battery cell pack in the volume V in this manner, schematically illustrated in Figure 7B, the battery cell pack 710 is protected from both vibration and mechanical shock by the resilient members 730 which are configured to absorb such harmful forces. The battery cells are more sensitive to shock directed transversally to the elongation direction, which is why the resilient members are arranged to absorb the largest forces in the direction transversal to the elongation direction. Also, if the battery is inserted into a through-hole battery compartment, like the battery compartment 200 shown in Figure 2, then the battery is already reasonably well protected from impact in the extension direction E.

It is a further advantage that the resilient members are supported by the gables 320, 330, since it is the gables which extend out from a though-hole battery compartment 200 like the one discussed above in connection to Figure 2. In this case the power tool body provides protection for the central housing, while the gables extend out from the power tool and are in need of additional protection, primarily from mechanical impact.

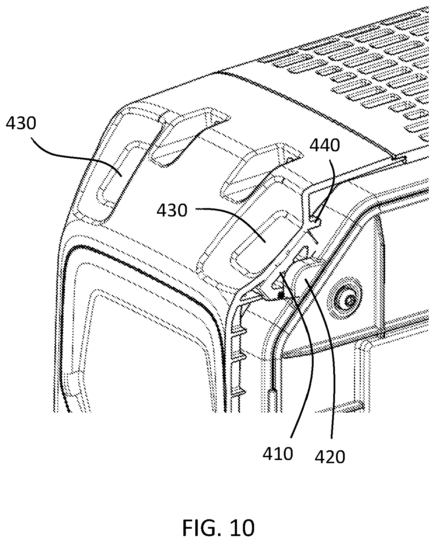

An example of the supporting location on the gable will be discussed in more detail below in connection to Figure 10. It is appreciated the different types of supporting locations can be designed.

The elongated battery cells 510 in Figure 5 extend between a first supporting planar structure 520 and a second supporting planar structure 530, and the resilient members 410a-h are attached to the supporting planar structure 520, 530. Thus, the resilient members suspend the supporting planar structures inside the volume V in a stable manner, at least in part since forces are distributed over the battery cells via the supporting planar structures 520, 530. According to some aspects, the planar structures 520, 530 extend in respective planes, and the resilient members 410a-h extend between the planes. Mechanical shock directed transversally to the elongation direction of the battery cells 510 is then efficiently distributed over the resilient members by the supporting planar structures which leads to a more efficient absorption of mechanical impact forces.

At least one of the resilient members 410a-h, 730 may be supported on a respective arm 420 extending from the battery cell pack towards the supporting location 720. The length and geometry of this arm 420 can be adapted to fit different gable geometries, i.e., it can be made longer or shorter and be directed in different angles towards the supporting location on the gable. Thus, the same shock absorption arrangement, and the same type of resilient elements, can be adapted for use with different types of gable portions. This is particularly advantageous if the battery forms part of a modular battery system.

An example of such a modular battery system is shown in Figure 6. This modular battery system 600 comprises a plurality of battery types 610, 620. Only two types are shown in Figure 6, but it is appreciated that the modular battery system 600 may comprise any number of battery types. Each battery type comprises a central housing 310 terminated by a first gable 320 and a second gable 330, the first gable 320 is arranged opposite to the second gable 330 and facing in the insertion direction D. As discussed above, the gables 320, 330 mate with the central housing 310 along respective gable rims 325, 335, thereby defining a volume V delimited by the gables 320, 330 and the central housing 310, where each gable defines a respective first and second gable volume. The battery further comprises a battery cell pack 410, 500, 710 arranged suspended in the volume V by at least three resilient members 410ah, 730. These resilient members 410a-h extend in a direction D1-D4 diagonally away from a mass center M of the battery cell pack 410, 500, 700 towards a supporting location 720 on one of the gable portion rims 325, 335, as schematically illustrated in Figures 7A and 7B.

Notably, the central housing 310 is the same for each battery type in the plurality of battery types, and the first and/or second gable volume differs between a first battery type and a second battery type in the plurality of battery types.

The batteries discussed herein may have a weight between 2500g and 5500g, and preferably either 3000g (for the first type 610) or 5100g (for the second type 620).

By having the same central housing on all types of batteries in the modular battery system and different gable portions, the energy capacity of the battery can be adapted to the power tool and task at hand, without changing any of the interfaces towards the power tool or towards a battery charger, since both mechanical attachment arrangement and the electrical connectors are arranged on the central housing which is the same for all types. Furthermore, the shock absorption arrangements discussed herein are adaptable to different gable geometries, which is an advantage. This means that the resilient members can be supported on a gable of the first type of battery and by a gable of the second type of battery, regardless of differences in supporting angle, since the resilient member is pivotable and supported on an arm 420 which can be adapted for a given type of gable.

As mentioned above, the modular battery system 600 may comprise any number of battery types, each having a respective energy storage capacity.

The different battery types comprised in the modular battery system may also be adapted for different use cases and for different types of vibration and mechanical shock. The resilient members may be specifically tailored to mitigate a specific type of vibration, e.g., having a specific frequency characteristic or strength. The resilient members may, e.g., be adapted to different use cases by changing their size, the material used in the resilient member, the size of the cavities, and so on. Thus, one battery type may be designed to be able to withstand strong mechanical impact, while another battery type in the modular battery system may be designed to absorb vibration in a given frequency range resulting from use of a particular type of power tool.

To improve cooling of the battery cell pack, the volume V can be configured to extend in fluid connection to all sides of the battery cell pack 500, 700. This means that a flow of cooling air can enter the volume V via a first opening, transport heat away from the battery cells, and then exit the volume V via a second opening. It is appreciated that the herein disclosed shock absorption arrangements promote efficient colling of the battery cells by allowing cooling air to pass more or less un-hindered through the battery cell pack. More traditional forms of shock absorption devices are often associated with a larger amount of internal blockage which hinders a flow of cooling air from passing through the battery to transport heat away from the battery cells.

For example, a flow of cooling air can be led into the battery via the grated aperture 401 shown in Figure 4 and exit the battery via the grated aperture 402.

Advantageously, the resilient members 410, 410a-h, 730 are optionally non-fixedly supported on the gable portion rims 325, 335. This means that the resilient members are not fixedly attached to the gable portion rims by attachment members such as snap-lock mechanisms, glue, or the like. Rather, the battery cell pack can be inserted into the central housing and locked in place by the gables, and then removed from the central housing again in a convenient manner by simply removing the gables from the central housing. This also allows for convenient access to the battery pack during servicing and maintenance.

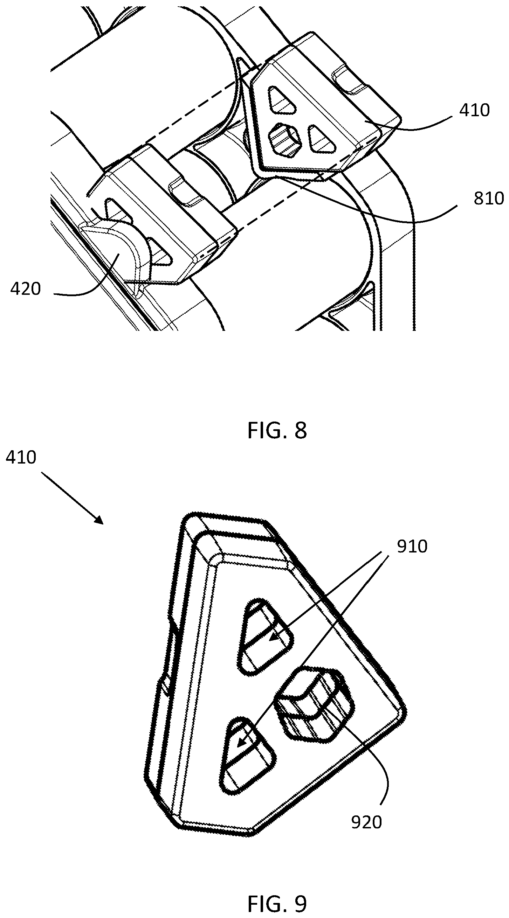

With particular reference to Figure 8, at least one of the resilient members 410, 410a-h, 730 is optionally pivotably attached to a respective trunnion on the battery cell pack 410, 500, 710. This means that the resilient member may pivot abut the trunnion as it is inserted into the central housing and locked in place by the gable supporting the resilient member. This simplifies assembly of the battery. Two opposing resilient members may be joined into a single resilient member, indicated by the dashed lines in Figure 8. This results in a larger resilient member potentially associated with a larger shock absorption ability.

It is noted that the resilient members 410 may be received in matching recesses, here V-shaped. These matching recesses hold the resilient members in place and counteract large pivoting motions by the resilient members.

With reference to Figure 9 a resilient member 410, 410a-h, 730 may be formed with a rectangular base and a triangular section, where the rectangular base faces the gable portion rim 325, 335. To improve the shock absorption ability of the resilient members, a resilient member 410, 410a-h, 730 may comprise one or more cavities 910. A resilient member 410, 410a-h, 730 is associated with a Shore durometer value, or Shore hardness, between 60-100, and preferably between 70-90, measured with durometer type A according to **DIN** ISO 7619-1, i.e., the resilient members are preferably relatively hard and not overly resilient.

A resilient member may comprise a non-circular cross section through hole 920 (a hexagon cross-section hole is shown in Figure 9) for mounting onto a trunnion on the arm 420. This creates friction against the trunnion and simplifies assembly of the battery components.

Figure 10 illustrates details of a gable. The resilient member is supported on a surface 430 formed in the gable. This surface constitutes the supporting location 720. The surface is angled transversally to the respective direction D1-D4 shown in Figure 7A.

The surface 430 is optionally delimited by a ridge 440 extending around the surface perimeter to prevent the resilient member from moving around too much on the surface.

## Claims

1. A battery (110, 300, 400, 700) for a power tool (100), the battery comprising
a central housing (310) terminated by a first gable (320) and a second gable (330), the first gable (320) being arranged opposite to the second gable (330) and facing in an insertion direction (D) of the battery, wherein the gables (320, 330) mate with the central housing (310) along respective gable rims (325, 335), thereby defining a volume (V) delimited by the gables (320, 330) and the central housing (310),
the battery further comprising a battery cell pack (410, 500, 710) comprising a plurality of elongated battery cells (510) extending in an elongation direction (E) transversal to the insertion direction (D),
wherein the battery cell pack (410, 500, 710) is arranged suspended in the volume (V) by at least three resilient members (410a-h, 730),
wherein each resilient member (410a-h) extends in a direction (D1-D4) diagonally away from a mass center (M) of the battery cell pack (410, 500, 700) and transversal to the elongation direction (E), towards a supporting location (720) on one of the gable portion rims (325, 335).

2. The battery (110, 300, 400, 700) according to claim 1, wherein the elongated battery cells (510) extend between a first supporting planar structure (520) and a second supporting planar structure (530), wherein the resilient members (410a-h) are attached to the supporting planar structure (520, 530).

3. The battery (110, 300, 400, 700) according to claim 2, wherein the planar structures (520, 530) extend in respective planes, wherein the resilient members (410a-h) extend between the planes.

4. The battery (110, 300, 400, 700) according to any previous claim, wherein at least one of the resilient members (410a-h, 730) is supported on a respective arm (420) extending from the battery cell pack towards the supporting location (720).

5. The battery (110, 300, 400, 700) according to any previous claim, wherein the volume (V) extends in fluid connection to all sides of the battery cell pack (500, 700).

6. The battery (110, 300, 400, 700) according to any previous claim, wherein the resilient members (410, 410a-h, 730) are non-fixedly supported on the gable portion rims (325, 335).

7. The battery (110, 300, 400, 700) according to any previous claim, wherein the gable rims (325, 335) are rectangular or rounded rectangular in shape, wherein the central housing (310) has eight corners, and each corner is associated with a respective resilient member (410, 410a-h, 730).

8. The battery (110, 300, 400, 700) according to any previous claim, wherein at least one of the resilient members (410, 410a-h, 730) is pivotably attached to a respective trunnion on the battery cell pack (410, 500, 710).

9. The battery (110, 300, 400, 700) according to any previous claim, wherein at least one of the resilient members (410, 410a-h, 730) is formed by a rectangular base and a triangular section, where the rectangular base faces the gable portion rim (325, 335).

10. The battery (110, 300, 400, 700) according to any previous claim, wherein at least one of the resilient members (410, 410a-h, 730) comprises one or more cavities (910).

11. The battery (110, 300, 400, 700) according to any previous claim, wherein at least one of the resilient members (410, 410a-h, 730) is associated with a Shore durometer value, or Shore hardness, between 60-100, and preferably between 70-9m0, measured with durometer type A according to DIN ISO 7619-1.

12. The battery (110, 300, 400, 700) according to any previous claim, having a weight between 2500g and 5500g, and preferably either 3000g or 5100g.

13. The battery (110, 300, 400, 700) according to any previous claim, wherein the first gable (320) and the second gable (330) are attached to the central housing (310) by releasable fastening members (340).

14. The battery (110, 300, 400, 700) according to any previous claim, adapted to be inserted into a through-hole battery compartment (200) in a power tool (100).

15. A modular battery system (600) comprising a plurality of battery types (610, 620), each battery type comprising:
a central housing (310) terminated by a first gable (320) and a second gable (330), the first gable (320) being arranged opposite to the second gable (330) and faces in the insertion direction (D), wherein the gables (320, 330) mate with the central housing (310) along respective gable rims (325, 335), thereby defining a volume (V) delimited by the gables (320, 330) and the central housing (310), where each gable defines a respective first and second gable volume,
each battery type further comprising a battery cell pack (410, 500, 710) arranged suspended in the volume (V) by at least three resilient members (410a-h, 730),
wherein the resilient members (410a-h) extend in a direction (D1-D4) diagonally away from a mass center (M) of the battery cell pack (410, 500, 700) towards a supporting location (720) on one of the gable portion rims (325, 335),
where the central housing (310) is the same for each battery type in the plurality of battery types, and where the first and/or second gable volume differs between a first battery type and a second battery type in the plurality of battery types.

## Patentansprüche

1. Batterie (110, 300, 400, 700) für ein Elektrowerkzeug (100), wobei die Batterie Folgendes umfasst
ein zentrales Gehäuse (310), das durch einen ersten Giebel (320) und einen zweiten Giebel (330) abgeschlossen ist, wobei der erste Giebel (320) dem zweiten Giebel (330) gegenüberliegend angeordnet ist und in eine Einsetzrichtung (D) der Batterie weist, wobei die Giebel (320, 330) entlang jeweiliger Giebelränder (325, 335) mit dem zentralen Gehäuse (310) zusammengefügt sind, wodurch ein Volumen (V) definiert ist, das durch die Giebel (320, 330) und das zentrale Gehäuse (310) begrenzt ist,
wobei die Batterie ferner ein Batteriezellenpaket (410, 500, 710) umfasst, das mehrere längliche Batteriezellen (510) umfasst, die sich in einer Ausdehnungsrichtung (E) quer zur Einsetzrichtung (D) erstrecken,
wobei das Batteriezellenpaket (410, 500, 710) durch mindestens drei elastische Elemente (410a-h, 730) in dem Volumen (V) aufgehängt angeordnet ist,
wobei sich jedes elastische Element (410a-h) in einer Richtung (D1-D4) diagonal weg von einem Massenzentrum (M) des Batteriezellenpakets (410, 500, 700) und quer zur Ausdehnungsrichtung (E) hin zu einer Abstützstelle (720) auf einem der Giebelabschnittsränder (325, 335) erstreckt.

2. Batterie (110, 300, 400, 700) nach Anspruch 1, wobei sich die länglichen Batteriezellen (510) zwischen einer ersten planaren Stützstruktur (520) und einer zweiten planaren Stützstruktur (530) erstrecken, wobei die elastischen Elemente (410a-h) an der planaren Stützstruktur (520, 530) angebracht sind.

3. Batterie (110, 300, 400, 700) nach Anspruch 2, wobei sich die planaren Strukturen (520, 530) in jeweiligen Ebenen erstrecken, wobei sich die elastischen Elemente (410a-h) zwischen den Ebenen erstrecken.

4. Batterie (110, 300, 400, 700) nach einem der vorhergehenden Ansprüche, wobei mindestens eines der elastischen Elemente (410a-h, 730) auf einem jeweiligen Arm (420) abgestützt ist, der sich von dem Batteriezellenpaket hin zu der Abstützstelle (720) erstreckt.

5. Batterie (110, 300, 400, 700) nach einem der vorhergehenden Ansprüche, wobei sich das Volumen (V) in Fluidverbindung zu allen Seiten des Batteriezellenpakets (500, 700) erstreckt.

6. Batterie (110, 300, 400, 700) nach einem der vorhergehenden Ansprüche, wobei die elastischen Elemente (410, 410a-h, 730) nicht fest auf den Giebelabschnittsrändern (325, 335) abgestützt sind.

7. Batterie (110, 300, 400, 700) nach einem der vorhergehenden Ansprüche, wobei die Giebelränder (325, 335) eine rechteckige oder abgerundete rechteckige Form aufweisen, wobei das zentrale Gehäuse (310) acht Ecken aufweist und jede Ecke mit einem jeweiligen elastischen Element (410, 410a-h, 730) assoziiert ist.

8. Batterie (110, 300, 400, 700) nach einem der vorhergehenden Ansprüche, wobei mindestens eines der elastischen Elemente (410, 410a-h, 730) schwenkbar an einem jeweiligen Zapfen auf dem Batteriezellenpaket (410, 500, 710) angebracht ist.

9. Batterie (110, 300, 400, 700) nach einem der vorhergehenden Ansprüche, wobei mindestens eines der elastischen Elemente (410, 410a-h, 730) durch eine rechteckige Basis und einen dreieckigen Bereich gebildet ist, wobei die rechteckige Basis zum Giebelabschnittsrand (325, 335) weist.

10. Batterie (110, 300, 400, 700) nach einem der vorhergehenden Ansprüche, wobei mindestens eines der elastischen Elemente (410, 410a-h, 730) einen oder mehrere Hohlräume (910) umfasst.

11. Batterie (110, 300, 400, 700) nach einem der vorhergehenden Ansprüche, wobei mindestens eines der elastischen Elemente (410, 410a-h, 730) mit einem Shore-Durometerwert oder einer Shore-Härte zwischen 60-100 und vorzugsweise zwischen 70-90, gemessen mit Durometertyp A gemäß DIN ISO 7619-1, assoziiert ist.

12. Batterie (110, 300, 400, 700) nach einem der vorhergehenden Ansprüche, die ein Gewicht zwischen 2500 g und 5500 g und vorzugsweise entweder von 3000 g oder 5100 g aufweist.

13. Batterie (110, 300, 400, 700) nach einem der vorhergehenden Ansprüche, wobei der erste Giebel (320) und der zweite Giebel (330) durch lösbare Befestigungselemente (340) an dem zentralen Gehäuse (310) angebracht sind.

14. Batterie (110, 300, 400, 700) nach einem der vorhergehenden Ansprüche, die dazu ausgelegt ist, in ein Durchgangsloch-Batteriefach (200) in einem Elektrowerkzeug (100) eingesetzt zu sein.

15. Modulares Batteriesystem (600), das mehrere Batterietypen (610, 620) umfasst, wobei jeder Batterietyp Folgendes umfasst:
ein zentrales Gehäuse (310), das durch einen ersten Giebel (320) und einen zweiten Giebel (330) abgeschlossen ist, wobei der erste Giebel (320) dem zweiten Giebel (330) gegenüberliegend angeordnet ist und in die Einsetzrichtung (D) weist, wobei die Giebel (320, 330) entlang jeweiliger Giebelränder (325, 335) mit dem zentralen Gehäuse (310) zusammengefügt sind, wodurch ein Volumen (V) definiert ist, das durch die Giebel (320, 330) und das zentrale Gehäuse (310) begrenzt ist, wobei jeder Giebel ein erstes bzw. ein zweites Volumen definiert,
wobei jeder Batterietyp ferner ein Batteriezellenpaket (410, 500, 710) umfasst, das durch mindestens drei elastische Elemente (410a-h, 730) in dem Volumen (V) aufgehängt angeordnet ist,
wobei sich die elastischen Elemente (410a-h) in einer Richtung (D1-D4) diagonal weg von einem Massenzentrum (M) des Batteriezellenpakets (410, 500, 700) hin zu einer Abstützstelle (720) auf einem der Giebelabschnittsränder (325, 335) erstrecken,
wobei das zentrale Gehäuse (310) für jeden Batterietyp aus den mehreren Batterietypen gleich ist, und wobei sich das erste und/oder das zweite Giebelvolumen zwischen einem ersten Batterietyp und einem zweiten Batterietyp aus den mehreren Batterietypen unterscheidet.

## Revendications

1. Batterie (110, 300, 400, 700) pour un outil électrique (100), la batterie comprenant
un boîtier central (310) terminé par un premier pan (320) et un second pan (330), le premier pan (320) étant agencé de façon opposée au second pan (330) et faisant face dans une direction d'insertion (D) de la batterie, dans laquelle les pans (320, 330) s'accouplent avec le boîtier central (310) le long de pourtours de pan respectifs (325, 335), définissant ainsi un volume (V) délimité par les pans (320, 330) et le boîtier central (310),
la batterie comprenant en outre un bloc de cellules de batterie (410, 500, 710) comprenant une pluralité de cellules de batterie allongées (510) s'étendant dans une direction d'allongement (E) transversale à la direction d'insertion (D),
dans laquelle le bloc de cellules de batterie (410, 500, 710) est agencé de façon suspendue dans le volume (V) par le biais d'au moins trois éléments résilients (410a-h, 730),
dans laquelle chaque élément résilient (410a-h) s'étend dans une direction (D1-D4) diagonalement en éloignement d'un centre de masse (M) du bloc de cellules de batterie (410, 500, 700) et transversale à la direction d'allongement (E), vers un emplacement de support (720) sur un des pourtours de partie de pan (325, 335).

2. Batterie (110, 300, 400, 700) selon la revendication 1, dans laquelle les cellules de batterie allongées (510) s'étendent entre une première structure plane de support (520) et une seconde structure plane de support (530), dans laquelle les éléments résilients (410a-h) sont attachés à la structure plane de support (520, 530).

3. Batterie (110, 300, 400, 700) selon la revendication 2, dans laquelle les structures planes (520, 530) s'étendent dans des plans respectifs, dans laquelle les éléments résilients (410a-h) s'étendent entre les plans.

4. Batterie (110, 300, 400, 700) selon une quelconque revendication précédente, dans laquelle au moins un des éléments résilients (410a-h, 730) est supporté sur un bras respectif (420) s'étendant depuis le bloc de cellules de batterie vers l'emplacement de support (720).

5. Batterie (110, 300, 400, 700) selon une quelconque revendication précédente, dans laquelle le volume (V) s'étend en raccordement fluidique avec tous les côtés du bloc de cellules de batterie (500, 700).

6. Batterie (110, 300, 400, 700) selon une quelconque revendication précédente, dans laquelle les éléments résilients (410, 410a-h, 730) sont supportés de façon non fixe sur les pourtours de partie de pan (325, 335).

7. Batterie (110, 300, 400, 700) selon une quelconque revendication précédente, dans laquelle les pourtours de pan (325, 335) sont de forme rectangulaire ou rectangulaire arrondie, dans laquelle le boîtier central (310) a huit coins, et chaque coin est associé à un élément résilient respectif (410, 410a-h, 730).

8. Batterie (110, 300, 400, 700) selon une quelconque revendication précédente, dans laquelle au moins un des éléments résilients (410, 410a-h, 730) est attaché de façon pivotante à un tourillon respectif sur le bloc de cellules de batterie (410, 500, 710).

9. Batterie (110, 300, 400, 700) selon une quelconque revendication précédente, dans laquelle au moins un des éléments résilients (410, 410a-h, 730) est formé par une base rectangulaire et une section triangulaire, où la base rectangulaire fait face au pourtour de partie de pan (325, 335).

10. Batterie (110, 300, 400, 700) selon une quelconque revendication précédente, dans laquelle au moins un des éléments résilients (410, 410a-h, 730) comprend une ou plusieurs cavités (910).

11. Batterie (110, 300, 400, 700) selon une quelconque revendication précédente, dans laquelle au moins un des éléments résilients (410, 410a-h, 730) est associé à une valeur de duromètre Shore, ou dureté Shore, entre 60 et 100, et de préférence entre 70-90, mesurée avec un duromètre type A selon DIN ISO 7619-1.

12. Batterie (110, 300, 400, 700) selon une quelconque revendication précédente, ayant un poids entre 2 500 g et 5 500 g, et de préférence soit 3 000 g soit 5 100 g.

13. Batterie (110, 300, 400, 700) selon une quelconque revendication précédente, dans laquelle le premier pan (320) et le second pan (330) sont attachés au boîtier central (310) par des éléments de fixation libérables (340).

14. Batterie (110, 300, 400, 700) selon une quelconque revendication précédente, adapté pour être inséré dans un compartiment de batterie à trou traversant (200) dans un outil électrique (100).

15. Système de batterie modulaire (600) comprenant une pluralité de types de batterie (610, 620), chaque type de batterie comprenant :
un boîtier central (310) terminé par un premier pan (320) et un second pan (330), le premier pan (320) étant agencé de façon opposée au second pan (330) et faisant face dans la direction d'insertion (D), dans lequel les pans (320, 330) s'accouplent avec le boîtier central (310) le long de pourtours de pan respectifs (325, 335), définissant ainsi un volume (V) délimité par les pans (320, 330) et le boîtier central (310), où chaque pan définit des premier et second volumes de pan respectifs,
chaque type de batterie comprenant en outre un bloc de cellules de batterie (410, 500, 710) agencé de façon suspendue dans le volume (V) par le biais d'au moins trois éléments résilients (410a-h, 730),
dans lequel les éléments résilients (410a-h) s'étendent dans une direction (D1-D4) diagonalement en éloignement d'un centre de masse (M) du bloc de cellules de batterie (410, 500, 700) vers un emplacement de support (720) sur un des pourtours de partie de pan (325, 335),
où le boîtier central (310) est le même pour chaque type de batterie dans la pluralité de types de batterie, et où les premier et/ou second volumes de pan diffèrent entre un premier type de batterie et un second type de batterie dans la pluralité de types de batterie.
